(19) Europäisches Patentamt
European Patent Office
Office européen des brevets

(11) Veröffentlichungsnummer: **0 008 640**
**B1**

(12) # EUROPÄISCHE PATENTSCHRIFT

(45) Veröffentlichungstag der Patentschrift: **16.09.81**

(51) Int. Cl.³: **B 01 D 53/34,** C 10 G 21/06, C 10 K 1/08

(21) Anmeldenummer: **79102434.2**

(22) Anmeldetag: **13.07.79**

(54) **Verfahren zur Entfernung von Schwefelwasserstoff aus Gasen oder flüssigen Kohlenwasserstoffen und so gereinigte Gase oder flüssige Kohlenwasserstoffe.**

(30) Priorität: **21.07.78 GB 3084378**

(43) Veröffentlichungstag der Anmeldung: **19.03.80 Patentblatt 80/6**

(45) Bekanntmachung des Hinweises auf die Patenterteilung: **16.09.81 Patentblatt 81/37**

(84) Benannte Vertragsstaaten: **BE DE FR GB IT NL**

(56) Entgegenhaltungen:
**AT-B-232 486**
**AT-B-238 144**
**DE-A-1 667 101**
**DE-A-1 669 337**
**DE-A-1 806 886**
**DE-A-1 956 493**
**DE-A-2 015 068**
**DE-A-2 131 017**
**DE-B-1 045 373**
**DE-B-1 105 089**
**DE-B-1 241 935**
**DE-C-1 082 235**
**FR-A1-2 387 904**
**US-A-3 717 701**

(73) Patentinhaber: **CIBA-GEIGY AG, Patentabteilung Postfach, CH-4002 Basel (CH)**

(72) Erfinder: **Marshall, Alan, Dr., 24, Newquay Drive Broken Cross, Macclesfield, Cheshire (GB)**

(56) Entgegenhaltungen:
**BRENNSTOFF-CHEMIE, Band 50, Nr. 4, 1969, Essen**
**T. NICKLIN «Das Stretford-Verfahren zur Entfernung von Schwefel aus Gasen», Seiten T 24 und T 25**

EP 0 008 640 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Entfernung von Schwefelwasserstoff aus Gasen oder flüssigen Kohlenwasserstoffen und so gereinigte Gase oder flüssige Kohlenwasserstoffe

Die vorliegende Erfindung betrifft ein Verfahren zum Entfernen von $H_2S$ aus Gasen und flüssigen Kohlenwasserstoffen.

Ein weitverbreitetes Verfahren zum Entfernen von $H_2S$ aus Gasen und flüssigen Kohlenwasserstoffen ist der sogenannte Stretford-Prozess. Dieses Verfahren ist detailliert in GB-PS 948.270 beschrieben. In diesem Verfahren führt man das Gas bzw. den flüssigen Kohlenwasserstoff durch eine wässrige alkalische Lösung, welche eine oder mehrere Anthrachinondisulfonsäure (ADA), eine Metallverbindung, worin das Metall mindestens zweiwertig ist und gegebenenfalls einen Komplexbildner zum Zurückhalten des Metalles in der Lösung enthält.

Neuerdings wurde gefunden, dass gewisse neue Anthrachinonsulfonamide gleich gute oder bessere Wirksamkeit zeigen im Stretford-Prozess als die Verbindungen, die aus GB-PS 948.270 bekannt sind.

Bevorzugtes Metall ist Vanadium und als Komplexbildner kommen Natrium-kaliumtartrat, andere wasserlösliche Tartrate, Weinsäure und Äthylendiamin-tetraessigsäure in Frage.

Die Erfahrung zeigt, dass die Verwendung von Komplexbildner wesentlich ist, um den Vanadiumverlust zu verhindern, der sich sonst in Form von schwarzer Ablagerung in der Waschflüssigkeit ausscheidet. Darüber hinaus hat sich gezeigt, dass Zitronensäure wirksamer ist als die in GB-PS 948.270 spezifisch angegebenen Komplexbildner.

Die Komplexbildner, die üblicherweise im Stretford-Prozess verwendet werden, haben den Nachteil, dass sie infolge eintretender Oxidation während dem Verfahren unbrauchbar werden und kontinuierlich ersetzt werden müssen. Darüber hinaus müssen die bekannten Komplexbildner in einer hohen Rate im Verhältnis zu Metall eingesetzt werden (2 Mol Zitronensäure für 1 Mol Vanadium).

Es wurde nun gefunden, dass Komplexbildner mit einer Phosphonsäuregruppe sich überraschend gut eignen für den Stretford-Prozess. Diese Komplexbildner sind oxidativ stabiler, können in kleinerer Konzentration eingesetzt werden und brauchen seltener im System ersetzt werden.

Die vorliegende Erfindung betrifft daher ein Verfahren zum Entfernen von $H_2S$ aus Gasen oder flüssigen Kohlenwasserstoffen, in dem das Gas oder der flüssige Kohlenwasserstoff durch eine wässrige alkalische Lösung, vorzugsweise mit pH 8–10, führt, und dadurch gekennzeichnet ist, dass die Lösung

a) eine Anthrachinondisulfonsäure oder ihr wasserlösliches Sulfonamid

b) eine Metallverbindung mit einem mindestens zweiwertigen Metall und

c) einen Komplexbildner der Formel I

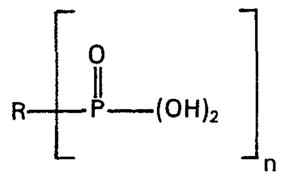

(I)

enthält, worin R eine Alkylgruppe mit 1–12 C-Atomen ist, welche mit einer oder mehreren Hydroxy- und/oder Carboxylgruppen substituiert oder unterbrochen sein kann, eine Carbonylgruppe, eine Phenylgruppe oder eine Aralkylgruppe mit 7–10 C-Atomen ist und n eine ganze Zahl von 1 bis 4 bedeutet, sowie die Salze der Verbindung der Formel I, insbesondere Alkalimetall- und Ammoniumsalze und Ester.

Bevorzugt sind die Verbindungen der Formel I, worin R eine Alkylgruppe mit 1–12 C-Atomen ist, welche mit einer oder mehreren Hydroxy- und/oder Carboxylgruppen substituiert oder unterbrochen sein kann, eine Phenylgruppe oder eine Aralkylgruppe mit 7–10 C-Atomen ist und n eine ganze Zahl von 1 bis 4 bedeutet, sowie deren Salze.

Das zu behandelnde Gas oder Gasgemisch kann neben dem $H_2S$ noch andere gasförmige Verunreinigungen enthalten, so z.B. die Oxide von Kohlenstoff, Stickstoff und Schwefel, Wasserstoff, organische Schwefelverbindungen oder Cyanwasserstoff. Diese Verunreinigungen können, falls gewünscht, während dem Stretford-Prozess ebenfalls entfernt werden.

Die im Prozess verwendetet alkalische Lösung besteht aus einem oder mehreren bekannten Isomeren der ADA oder ihren Sulfonamiden, vorzugsweise in den Mengen 1000–4000 ppm (parts per million), insbesondere 2000–3000 ppm.

Beispiele für ADA, die allein oder im Gemisch verwendet werden können, sind Anthrachinon-1,5-, -1,6-, -1,7-, -1,8-, -2,6- und -2,7-disulfonsäuren, sowie deren im Handel erhältliche Gemische (z.B. Anthrachinon-2,6- und -2,7-disulfonsäure oder Anthrachinon-1,5- und -1,8-disulfonsäure). Weitere Anthrachinonsulfonsäuren, die verwendet werden können, sind die Sulfonierungsprodukte der Verbindung der Formel II

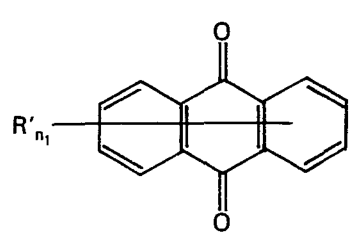

(II),

worin $n_1$ 1 bis 4 und die Reste R' das gleiche oder verschiedene $C_1$-$C_4$ Alkyl oder Chlor sind, wobei mindestens ein R' Alkyl bedeutet und, falls nur ein Ring substituiert ist, kann R' höchstens 3 Substituenten tragen. Sollten jedoch beide Ringe substituiert sein, so können pro Ring maximal 2 Substituenten vorhanden sein.

Die aufgezählten Alkyl-anthrachinonsulfonsäuren und deren Carboxylderivate sind in BE-PS 846.038 und in GB-PS 1.508.268 beschrieben. Geeignete Sulfonamide, als Komponente a), sind Verbindungen der Formel III

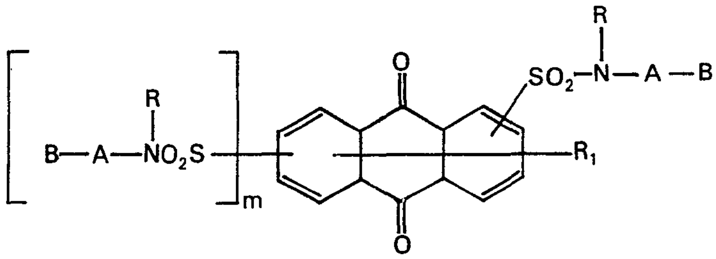

(III),

worin A eine geradkettige oder verzweigte Alkylengruppe mit 1-4 C-Atomen ist, B $-SO_3M$, $-CO_2M$, $-PO_3HM$ oder $-PO_3M_2$ bedeutet, M Wasserstoff oder ein wasserlöslich-machendes Kation ist, R Wasserstoff, ein wasserlöslich-machendes Kation oder eine geradkettige oder verzweigte Alkylgruppe mit 1-4 C-Atomen bedeutet, $R_1$ für Wasserstoff, Methyl oder -COOH steht und m 0 oder 1 ist.

Sind M und R wasserlöslich-machende Kationen, so sind sie bevorzugt Alkalimetalle, wie z.B. Natrium oder Kalium, substituiertes oder unsubstituiertes Ammonium oder gegebenenfalls substituiertes $C_1$-$C_6$ Alkylamin. Beispiele für die Alkylsubstituenten sind Methyl, Äthyl, Propyl oder Butyl. Beispiele für substituiertes Alkylamin sind Mono-, Di- oder Triäthanolamin.

Bevorzugt ist B $-SO_3M$, $R_1$ Wasserstoff, M und R sind Wasserstoff, Natrium, Kalium oder Ammonium und A ist eine geradkettige $C_1$-$C_4$ Alkylengruppe. Besonders bevorzugt sind Verbindungen, worin $R_1$ Wasserstoff ist, M und R Wasserstoff, Natrium, Kalium oder Ammonium sind, A Methylen oder Äthylen und m 1 sind.

Die Verbindungen der Formel III, worin R Wasserstoff, geradkettiges oder verzweigtes $C_1$-$C_4$ Alkyl ist, können durch die Umsetzung der entsprechenden Anthrachinonsulfonylhalogenide der Formel IV

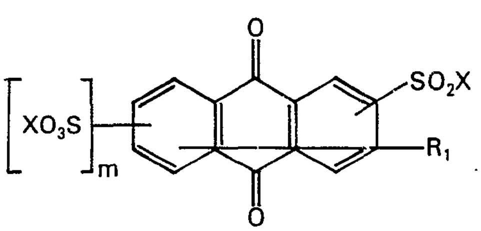

(IV)

mit einer Verbindung der Formel V

$R-NH-A-B$ (V),

worin X Halogen, insbesondere Chlor ist, und A, m, B, R und $R_1$ die zuvor genannte Bedeutung haben, hergestellt werden.

Die Reaktion erfolgt vorteilhafterweise in einer Lösung, die aus wässrigem Alkalisalz und aus einem wasserlöslichen Äther, wie z. B. Tetrahydrofuran, besteht und die Verbindung der Formel IV enthält. Die Lösung sollte eine Temperatur niedriger als 20 °C haben. Die Reaktionszeit kann den Reaktionsbedingungen entsprechend variieren, beträgt jedoch vorteilhafterweise 1 bis 12 Stunden.

Die Verbindungen der Formel IV können nach der Methode, beschrieben von Kozlev et al., J. Gen. Chem. Russ. 1947, 17, 289, hergestellt werden.

Die Verbindungen der Formel III, worin A $-CH_2-$ ist, können ferner aus den entsprechenden Anthrachinonsulfonamiden der Formel VI

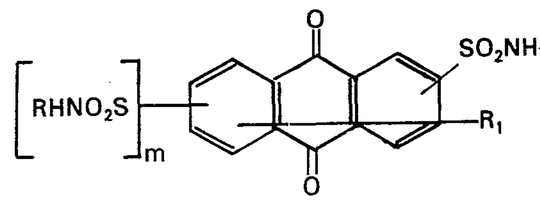

(VI)

und aus der Verbindung der Formel VII

$HO-CH_2-B$ (VII),

worin m, B, R und $R_1$ die zuvor genannte Bedeutung haben, hergestellt werden.

Vorteilhafterweise gibt man die Verbindung der Formel VI in eine wässrige Lösung der Formel VII und erwärmt bis zu 100 °C. Die Reaktionszeit kann je nach Reaktionsbedingungen variieren, beträgt jedoch üblicherweise 1 bis 12 Stunden. Die Rekationstemperatur ist vorzugsweise 60-80 °C.

Die Verbindung der Formel VII, worin B $-SO_3Na$ ist, kann auf einfache Weise aus Formaldehyd und Sodiumbisulfit in wässriger Lösung bei 80 °C hergestellt werden. In diesem Fall, um die Verbindung der Formel III herzustellen, gibt man die Verbindung der Formel VI zur beschriebenen Lösung.

Die Verbindung der Formel VI kann nach der Methode, welche von Tr. Leningr. Khim-Farmatseut. Inst., 1960, 11, 48, beschrieben ist, hergestellt werden.

Als Metallverbindung mit einem mindestens zweiwertigen Metall ist bevorzugt eine Vanadiumverbindung, insbesondere das Alkalimetallsalz und/oder Ammoniumsalz von Ortho-, Meta- oder Pyro-Vanadat. Als Beispiel seien Natriumammonium-vanadat und Natrium-metavanadat genannt. Die verwendete Menge beträgt 1000–

4000 ppm (parts per million), bevorzugt 1500–2500 ppm.

Andere zweiwertige Metalle, die in Frage kommen, sind Eisen, Kupfer, Kobalt, Chrom, Mangan und Nickel.

Bevorzugte Kategorien der Komplexbildner der Formel I:

Kategorie 1: Verbindungen der Formel Ia

Verbindungen der Formel I, worin n=2 und R durch Hydroxy substituiertes Alkyl ist

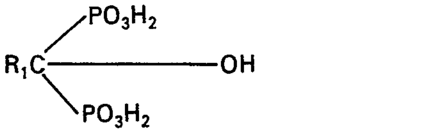

(Ia),

worin $R_1$ Wasserstoff oder $C_1$-$C_{11}$ Alkyl, vorzugsweise $C_1$-$C_4$ Alkyl, sowie deren wasserlösliche Ester und Salze bedeutet.

Beispiele für die Verbindungen der Formel Ia:
1-Hydroxyäthyliden-1,1-diphosphonsäure
1-Hydroxypropyliden-1,1-diphosphonsäure
1-Hydroxybutyliden-1,1-diphosphonsäure
1-Hydroxyamyliden-1,1-diphosphonsäure

Bevorzugt sind:
1-Hydroxyäthyliden-1,1-diphosphonsäure
1-Hydroxypropyliden-1,1-diphosphonsäure

Kategorie 2: Verbindungen der Formel Ib

Verbindungen der Formel I, worin n=1, 2, 3 oder 4 und R durch eine oder mehrere Carboxylgruppe substituiertes Alkyl sind.

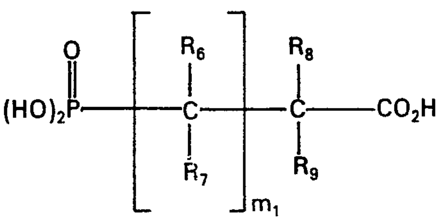

(Ib),

worin $m_1$ 0 oder 1 ist und, falls $m_1$ 0 ist, $R_8$ und $R_9$ gleich oder verschieden Wasserstoff, $C_1$-$C_4$ Alkyl, Allyl, Benzyl, $-CH_2PO_3H_2$, $-CH(COOH)-CH_2COOH$, $-CH_2CH(R_{10})Z$ ist, worin $R_{10}$ Wasserstoff, $-CH_3$, $-CH_2-COOH$, $-CH_2CH_2COOH$ und Z-COOH oder $-PO_3H_2$ bedeuten, oder $R_8$ Wasserstoff, $C_1$-$C_4$ Alkyl, $C_2$-$C_4$ Alkenyl, $C_2$-$C_4$ Alkinyl, Phenyl, $C_3$-$C_6$ Cycloalkyl, Benzyl, Phenäthyl oder der Rest $-CH(R_{11})-CH(R_{12})-COOH$, worin $R_{11}$ Wasserstoff, $C_1$-$C_4$ Alkyl oder $-COOH$ und $R_{12}$ Wasserstoff oder Methyl sind und $R_9$ $-CH_2COOH$ bedeuten, oder $R_8$ Wasserstoff ist und $R_9$ Hydroxy und, falls $m_1$ die Zahl 1 bedeutet, $R_6$ und $R_7$ gleich oder verschieden Wasserstoff, Methyl oder Phenyl sind unter der Bedingung, dass, wenn $R_6$ Phenyl ist, $R_7$ verschieden von Phenyl ist, $R_8$ Wasserstoff und $R_9$ Wasserstoff, $C_1$-$C_4$ Alkyl oder $-CH_2CH_2COOH$ bedeuten, oder $R_8$ und $R_9$ zusammen eine Methylengruppe ($=CH_2$) formen, oder $R_6$ Wasserstoff oder Methyl bedeutet, $R_7$ $-COOH$ oder $-PO_3H_2$ ist, $R_8$ Wasserstoff und $R_9$ $-CH_2COOH$ bedeuten, oder, wenn $R_8$ und $R_9$ für Wasserstoff stehen, $R_6$ $-CH_2CH_2COOH$ und $R_7$ $-PO_3H_2$ bedeuten.

Beispiele für die Verbindungen der Formel Ib:
1-Phosphonoäthan-1,2-dicarbonsäure
2-Phosphonessigsäure
2-Phosphonopropionsäure
2-Phosphonocapronsäure
3-Phenyl-2-phosphonoproprionsäure
2-Phosphonobut-3-en-carbonsäure
2-Methyl-3-phosphonoproprionsäure
2-Butyl-2-phosphonocapronsäure
2-Methyl-2-phosphonocapronsäure
2-Methyl-3-phenyl-2-phosphonopropionsäure
2,3-Diphosphonopropionsäure
1-Phosphonopropan-1,2,3-tricarbonsäure
2-Phosphonopropan-1,2,3-tricarbonsäure
3,3-Diphosphonopentan-1,5-dicarbonsäure
1-Phosphonopropan-1,3-dicarbonsäure
3-Methyl-1-phosphonopropan-1,3-dicarbonsäure
1-Phosphonobutan-1,3,4-tricarbonsäure
1-Phosphonopentan-1,3,5-tricarbonsäure
2,4-Diphosphonobuttersäure
4-Methyl-2,4-diphosphonobuttersäure
3-Phosphonopentan-1,3,5-tricarbonsäure
5-Phosphononan-1,3,5,7,9-pentacarbonsäure
3-Phosphonoheptan-1,3-dicarbonsäure
1-Phenyl-2-phosphonobutan-2,4-dicarbonsäure
3-Phosphonopropionsäure
3-Phosphonobuttersäure
3-Methyl-3-phosphonobuttersäure
3-Phenyl-3-phosphonopropionsäure
2-Methyl-3-phosphonopropionsäure
2-Butyl-3-phosphonopropionsäure
1-Phosphonobutan-2,4-dicarbonsäure
2-Phosphonomethylacrylsäure
2-Phosphonobutan-1,2,4-tricarbonsäure

Weniger bevorzugte Verbindungen der Formel Ib sind solche, worin $R_7$, $R_8$ oder $R_9$ $-PO_3H_2$ ist.

Beispiele für bevorzugte Verbindungen der Formel Ib:
3-Phenyl-2-phosphonopropionsäure
2,3-Diphosphonopropionsäure
1-Phosphonopropan-1,2,3-tricarbonsäure
3,3-Diphosphonopentan-1,5-dicarbonsäure
2-Phosphonomethacrylsäure und Hydroxyphosphonoessigsäure

Besonders bevorzugt sind:
1-Phosphonoäthan-1,2-dicarbonsäure
2-Phosphonoessigsäure
2-Phosphonopropionsäure
2-Methyl-3-phosphonopropionsäure
2-Phosphonopropan-1,2,3-tricarbonsäure
3-Phosphonopropionsäure und
2-Phosphonobutan-1,2,4-tricarbonsäure

Kategorie 3: Verbindungen der Formel Ic

Verbindungen der Formel I, worin n=1 oder 2, R $C_1$-$C_7$ Alkyl oder $C_2$-$C_7$ Alkyliden ist:

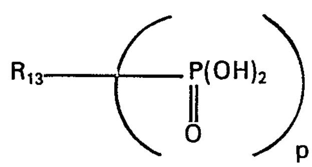

(Ic),

worin $R_{13}$ $C_1$-$C_7$ Alkyl oder $C_1$-$C_7$ Alkyliden ist, wobei $R_{13}$ gegebenenfalls mit einer oder mehreren

Gruppen enthaltend Sauerstoff oder Stickstoff oder mit -COOH substituiert sein kann und p die Zahl 1 oder 2 bedeutet.

Spezifische Beispiele für die Verbindungen der Formel Ic:
Methanphosphonsäure
Methanphosphonsäure-monomethylester
Methanphosphonsäure-monoäthylester
Mononatriummethanphosphonat
Äthanphosphonsäure
Butanphosphonsäure
Methan-diphosphonsäure
Äthan-1,2-diphosphonsäure und
Butan-1,4-diphosphonsäure
Bevorzugte Verbindungen der Formel Ic:
Methanphosphonsäure
Methan-diphosphonsäure und
Äthan-1,2-diphosphonsäure
sowie deren wasserlösliche Monoester und Salze.

Kategorie 4: Verbindungen der Formel Id

Verbindungen der Formel I, worin n=1 und R $C_1$-$C_6$ Alkyl ist:

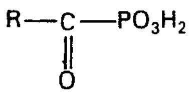

(Id)

Beispiele für die Verbindungen der Formel Id:
1-Oxoäthanphosphonsäure
1-Oxopropanphosphonsäure
1-Oxobutanphosphonsäure
1-Oxopentanphosphonsäure
1-Oxohexanphosphonsäure
1-Oxoheptanphosphonsäure

Besonders bevorzugte Verbindungen der Formel I:

1-Hydroxyäthyliden-1,1-diphosphonsäure und ihre Dimethyl- und Diäthylester, sowie ihre wasserlöslichen Salze.

Methanphosphonsäure und ihre Monomethyl- und Monoäthylester, sowie ihre wasserlöslichen Monosalze.

Die Komplexbildner werden vorzugsweise in den Mengen 10–7000 ppm, besonders bevorzugt 200–4000 ppm, eingesetzt.

Die Verbindungen können sowohl als freie Säuren als auch in Form ihrer wasserlöslichen Estern und Salzen, wie Alkalimetall- oder Ammoniumsalzen, eingesetzt werden.

Die Verbindungen der Formel Ia sind bekannte Verbindungen und können aus Phosphorigsäure oder $PCl_3$ und einem Acylierungsmittel mit anschliessender Dampfdestillation hergestellt werden. Die Herstellungsmethode von Verbindungen der Formel Ib ist in DE-OS 2.632.774 beschrieben. Die Verbindungen der Formel Ic können nach der in US-PS 2.644.002 beschriebenen Methode hergestellt werden. Die Verbindungen der Formel Id können aus ihren leicht erhältlichen Estern nach der Methode, beschrieben in Synthesis, 1978, Seite 609, hergestellt werden.

Das neue Verfahren besitzt besondere Vorteile durch die Verwendung der Komplexbildner der Formel I gegenüber dem Stand der Technik. Diese phosphonsäurehaltigen Komplexbildner zeichnen sich durch besondere Oxidationsresistenz aus und sind wirksamer als die bisher im Stretford-Prozess verwendeten Komplexbildner.

Der gefällte Schwefel kann mit konventionellen Techniken, wie Filtrieren, entfernt werden. Dies kann vor, während oder nach dem Regenerieren der alkalischen Lösung geschehen. Der so gewonnene Schwefel kann industriell weiterverwendet werden, wie z.B. in Schwefelsäure-Anlagen.

Das erfindungsgemässe Verfahren ist beliebig zum Reinigen von $H_2S$ enthaltenden Gasen und Flüssigkeiten anwendbar. Von besonderem Interesse ist jedoch die Reinigung von Kohlengas, Stadtgas, Abgas sowie von flüssigen Kohlenwasserstoffen, welche mit $H_2S$ verunreinigt sind.

Die folgenden Beispiele erläutern die Erfindung.

Beispiel 1–3:

Der Versuch allgemein:

Eine Pufferlösung enthält den zu prüfenden Komplexbildner in Wasser und Eisenmetall in Form von Stangen oder Coupon. Diese Lösung wird 56 Stunden bei 50 °C gerührt, während Sauerstoff die Lösung durchströmt. Der pH-Wert wird mit Hilfe von $CO_2$-Gas auf 8,5–9,5 gehalten. Das Niveau des Komplexbildners wird vor und nach der Oxidation gemessen.

Zitronensäure (Vergleichsversuch):

30,6 Teile Trinatriumcitrat-dihydrat, 1,13 Teile Natriumcarbonat und 1,36 Teile Natriumcarbonat werden in 100 Teilen Wasser gelöst. Die Lösung wird mit Sauerstoff in Gegenwart von 4,8 Teilen Eisenmetall, wie zuvor beschrieben, behandelt. Die Analyse der Lösung zeigt vor und nach der Oxidation 9,9% Verlust an Zitronensäure nach 56 Stunden (die freie Säure wird analysiert).

Äthylendiamintetraessigsäure (Vergleichsversuch):

30,6 Teile Dinatriumsalz von Äthylendiamintetraessigsäure-dihydrat, 2,8 Teile Natriumcarbonat und 3,4 Teile Natriumcarbonat werden in 250 Teilen Wasser aufgelöst. 100 Teile dieser Lösung werden mit Sauerstoff in Gegenwart von 4,8 Teilen Eisenmetall (in Form von Stange), wie bereits beschrieben, behandelt. Die Analyse der Lösung zeigt vor und nach der Oxidation 18,6% Verlust an Äthylendiamintetraessigsäure nach 56 Stunden (die freie Säure wird analysiert).

1-Hydroxyäthyliden-1,1-diphosphonsäure (Beispiel 1):

25 Teile Komplexbildner werden in 150 Teilen gelöst und der pH-Wert mit 8 N Natronlauge auf 9 eingestellt. 1,1 Teile Natriumcarbonat und 1,36 Teile Natriumbicarbonat werden zu der Lösung, die mit 250 Teilen Wasser verdünnt wurde, zugefügt. 100 Teile der entstandenen Lösung werden mit Sauerstoff in Gegenwart von 4,8 Teilen einer Eisenstange, wie bereits beschrieben, behandelt.

Die Analyse der Lösung zeigt vor und nach der Oxidation keinen Verlust an 1-Hydroxyäthyliden-1,1-diphosphonsäure.

Methanphosphonsäure (Beispiel 2):
25 Teile Komplexbildner werden in 150 Teilen Wasser gelöst und der pH-Wert mit 8 N Natronlauge auf 9 eingestellt. 1,1 Teile Natriumcarbonat und 1,36 Teile Natriumbicarbonat werden zu der Lösung, die mit 250 Teilen Wasser verdünnt wurde, zugefügt. 100 Teile der entstandenen Lösung werden mit Sauerstoff in Gegenwart von 4,8 Teilen einer Eisenstange, wie bereits beschrieben, behandelt. Die Analyse zeigt keinen Verlust an Methanphosphonsäure.

2-Phosphonobutan-1,2,4-tricarbonsäure (Beispiel 3):
25 Teile Komplexbildner werden in 150 Teilen Wasser gelöst und der pH-Wert mit 8 N Natronlauge auf 9 eingestellt. 2,8 Teile Natriumcarbonat und 3,4 Teile Natriumbicarbonat werden zu der Lösung, die mit 250 Teilen Wasser verdünnt wurde, zugefügt. 100 Teile der entstandenen Lösung werden mit Sauerstoff in Gegenwart von 4,8 Teilen einer Eisenstange, wie bereits beschrieben, behandelt. Die Analyse zeigt, dass 3% 2-Phosphonobutan-1,2,4-tricarbonsäure zersetzt wurde.

Beispiel 4
Versuche für die Komplexbilung mit Vanadium

500 ml Testlösung des folgenden Gehalts werden zubereitet:

| | |
|---|---|
| 5,65 g $Na_2CO_3$ | 40,0 g NaSCN |
| 6,8 g $NaHCO_3$ | 1,85 g $NaVO_3$ |
| 50,0 g $Na_2S_2O_3$ | Komplexbildner |

Diese Lösung enthält somit 1,5 g/l Vanadium, welche beim Verhältnis von 2:1 Vanadium: $H_2S$ 0,25 g $H_2S$ in 500 ml Lösung verbraucht, um $V^{5+}$ in $V^{4+}$ umzuwandeln. Es werden 125 ml $H_2S$ durch die Lösung geführt, d. h. 0,19 g $H_2S$, und somit entstehen ungefähr 75% $V^{4+}$ und 25% $V^{5+}$.

Diese Bedingungen sind ideal für die Entstehung eines schwarzen Vanadat/Vanadyl-Komplexes. Die Testlösung kann 2 Tage stehen bleiben und der entstandene schwarze Niederschlag mit Hilfe eines Whatman-Papierfilters Nr. 1 (Durchmesser 15 cm) abfiltriert. Die Menge des Niederschlages wird geschätzt.

Der Versuch wird mit verschiedenen Konzentrationen des Komplexbildners durchgeführt, um die minimale Menge des Komplexbildners zu bestimmen, bei dem kein Niederschlag entsteht. Diese Konzentration bedeutet die Mindestmenge des Komplexbildners, um Vanadium effektiv zu binden.

Die Ergebnisse sind in der folgenden Tabelle zusammengefasst:

| Beispiel | Komplexbildner | Menge des Komplexbildners, die zum Verhältnis Vanadium: Komplexbildner = 1:1 Mol führt | Mindestmenge des Komplexbildners, um Vanadium wirksam zu binden |
|---|---|---|---|
| - | Trinatriumcitratdihydrat | 4,3 g | 9,0 g |
| 1 | 1-Hydroxyäthyliden-1,1-diphosphonsäure | 5,2 g | 2,1 g |

Die Ergebnisse zeigen, dass es 2 Mol Zitronensäure benötigt, um 1 Mol Vanadium im Komplex zu binden, während 1 Mol 1-Hydroxyäthyliden-1,1-diphosphonsäure 2 Mol Vanadium zu binden vermag. Der letztere ist daher ein wesentlich wirksamerer Komplexbildner.

**Patentansprüche**

1. Verfahren zum Entfernen von $H_2S$ aus Gasen oder flüssigen Kohlenwasserstoffen, in dem das Gas oder der flüssige Kohlenwasserstoff durch eine wässrige alkalische Lösung, vorzugsweise mit pH 8–10, führt, dadurch gekennzeichnet, dass die Lösung

a) eine Anthrachinondisulfonsäure oder ihr wasserlösliches Sulfonamid

b) eine Metallverbindung mit einem mindestens zweiwertigen Metall und

c) einen Komplexbildner der Formel I

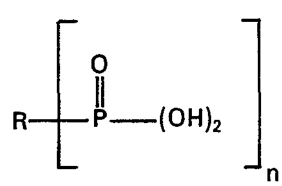

(I)

worin R eine Alkylgruppe mit 1–12 C-Atomen ist, welche mit einer oder mehreren Hydroxy- und/oder Carboxylgruppen substituiert oder unterbrochen sein kann, eine Carbonylgruppe, eine Phenylgruppe oder eine Aralkylgruppe mit 7–10 C-Atomen ist und n eine ganze Zahl von 1 bis 4 bedeutet, sowie die Salze der Verbindungen der Formel I, insbesondere Alkalimetall- und Ammoniumsalze und Ester, enthält.

2. Verfahren gemäss Anspruch 1, worin R eine Alkylgruppe mit 1–12 C-Atomen ist, welche mit einer oder mehreren Hydroxy- und/oder Carboxylgruppen substituiert oder unterbrochen sein kann, eine Phenylgruppe oder eine Aralkylgruppe mit 7–10 C-Atomen ist und n eine ganze Zahl von 1 bis 4 bedeutet, sowie deren Salze.

3. Verfahren gemäss Anspruch 1, worin der pH-Wert der alkalischen Lösung 8 bis 10 beträgt.

4. Verfahren gemäss Anspruch 1, worin das Salz der Verbindungen der Formel I Alkalimetall- oder Ammoniumsalz bedeutet.

5. Verfahren gemäss Anspruch 1 bis 4, dadurch gekennzeichnet, dass die Komponente a) in 1000 bis 4000 ppm (parts per million) eingesetzt wird.

6. Verfahren gemäss Anspruch 5, dadurch gekennzeichnet, dass die Komponente a) in 2000 bis 3000 ppm eingesetzt wird.

7. Verfahren gemäss Anspruch 1, dadurch gekennzeichnet, dass als Komponente a) eine oder mehrere Anthrachinon-1,5-, -1,6-, -1,7-, -1,8-, -2,6- und -2,7-disulfonsäuren oder die Gemische Anthrachinon-2,6- und -2,7-disulfonsäure bzw. Anthrachinon-1,5- und -1,8-disulfonsäure verwendet werden.

8. Verfahren gemäss Anspruch 1, dadurch gekennzeichnet, dass die Komponente a) das Sulfonierungsprodukt der Verbindung der Formel II

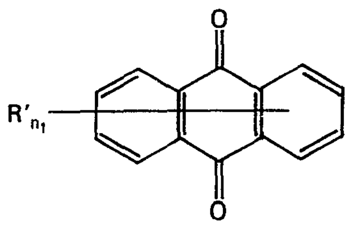
(II),

worin $n_1$ 1 bis 4 und die Reste R' das gleiche oder verschiedene $C_1$-$C_4$ Alkyl oder Chlor ist, wobei mindestens ein R'Alkyl bedeutet und, falls nur ein Ring substituiert ist, kann R' höchstens 3 Substituenten tragen, sollten jedoch beide Ringe substituiert sein, so können pro Ring maximal 2 Substituenten vorhanden sein.

9. Verfahren gemäss Anspruch 1, dadurch gekennzeichnet, dass die Komponente b) eine Vanadiumverbindung ist.

10. Verfahren gemäss Anspruch 9, dadurch gekennzeichnet, dass die Vanadiumverbindung ein Alkalimetall- oder Ammoniumsalz von Ortho-, Meta- oder Pyrovanadat ist.

11. Verfahren gemäss Anspruch 9 und 10, dadurch gekennzeichnet, dass die Komponente b) in 1000 bis 4000 ppm eingesetzt wird.

12. Verfahren gemäss Anspruch 11, dadurch gekennzeichnet, dass die Komponente b) in 1500 bis 2500 ppm eingesetzt wird.

13. Verfahren gemäss Anspruch 1, dadurch gekennzeichnet, dass die Komponente c) eine Verbindung der Formel Ia

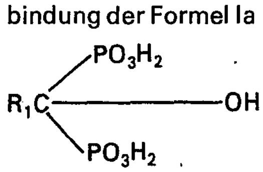
(Ia),

worin $R_1$ Wasserstoff oder $C_1$-$C_{11}$ Alkyl, sowie ihre wasserlöslichen Ester und Salze bedeutet, ist.

14. Verfahren gemäss Anspruch 13, worin $R_1$ eine $C_1$-$C_4$ Alkylgruppe bedeutet.

15. Verfahren gemäss Anspruch 13 und 14, dadurch gekennzeichnet, dass die Verbindung der Formel Ia 1-Hydroxyäthyliden-1,1-diphosphonsäure, ihr Dimethyl- oder Diäthylester oder ihr wasserlösliches Salz ist.

16. Verfahren gemäss Anspruch 1, dadurch gekennzeichnet, dass die Komponente c) eine Verbindung der Formel Ib

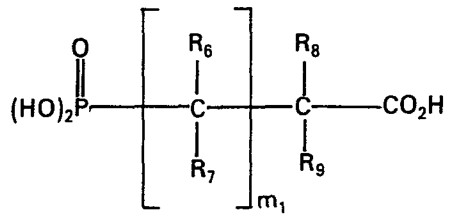
(Ib),

worin $m_1$ 0 oder 1 ist und, falls $m_1$ 0 ist, $R_8$ und $R_9$ gleich oder verschieden Wasserstoff, $C_1$-$C_4$ Alkyl, Allyl, Benzyl, $-CH_2PO_3H_2$, $-CH(COOH)-CH_2COOH$, $-CH_2CH(R_{10})Z$ ist, worin $R_{10}$ Wasserstoff, $-CH_3$, $-CH_2-COOH$, $-CH_2CH_2COOH$ und Z-COOH oder $-PO_3H_2$ bedeuten, oder $R_8$ Wasserstoff, $C_1$-$C_4$ Alkyl, $C_2$-$C_4$ Alkenyl, $C_2$-$C_4$ Alkinyl, Phenyl, $C_3$-$C_6$ Cycloalkyl, Benzyl, Phenäthyl oder der Rest $-CH(R_{11})-CH(R_{12})-COOH$, worin $R_{11}$ Wasserstoff, $C_1$-$C_4$ Alkyl oder $-COOH$ und $R_{12}$ Wasserstoff oder Methyl sind und $R_9$ $-CH_2COOH$ bedeuten, oder $R_8$ Wasserstoff oder Methyl sind und $R_9$ $-CH_2COOH$ bedeuten, oder $R_8$ Wasserstoff ist und $R_9$ Hydroxy und, falls $m_1$ die Zahl 1 bedeutet, $R_6$ und $R_7$ gleich oder verschieden Wasserstoff, Methyl oder Phenyl sind unter der Bedingung, dass, wenn $R_6$ Phenyl ist, $R_7$ verschieden von Phenyl ist, $R_8$ Wasserstoff und $R_9$ Wasserstoff, $C_1$-$C_4$ Alkyl oder $-CH_2CH_2COOH$ bedeuten, oder $R_8$ und $R_9$ zusammen eine Methylengruppe ($=CH_2$) formen, oder $R_6$ Wasserstoff oder Methyl bedeutet, $R_7$ $-COOH$ oder $-PO_3H_2$ ist, $R_8$ Wasserstoff und $R_9$ $-CH_2COOH$ bedeuten, oder, wenn $R_8$ und $R_9$ für Wasserstoff stehen, $R_6$ $-CH_2CH_2COOH$ und $R_7$ $-PO_3H_2$ bedeuten, ist.

17. Verfahren gemäss Anspruch 16, dadurch gekennzeichnet, das die Verbindung der Formel Ib

1-Phosphonoäthan-1,2-dicarbonsäure
2-Phosphonoessigsäure
2-Phosphonopropionsäure
2-Methyl-3-phosphonopropionsäure
2-Phosphonopropan-1,2,3-tricarbonsäure
3-Phosphonopropionsäure und
2-Phosphonobutan-1,2,4-tricarbonsäure ist.

18. Verfahren gemäss Anspruch 1, dadurch gekennzeichnet, dass die Komponente c) eine Verbindung der Formel Ic

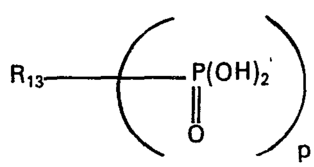
(Ic),

ist, worin $R_{13}$ $C_1$-$C_7$ Alkyl oder $C_1$-$C_7$ Alkyliden ist, wobei $R_{13}$ gegebenenfalls mit einer oder mehreren Gruppen enthaltend Sauerstoff oder Stickstoff oder mit -COOH substituiert sein kann und p die Zahl 1 oder 2 bedeutet.

19. Verfahren gemäss Anspruch 18, dadurch gekennzeichnet, dass die Verbindung der Formel Ic
Methanphosphonsäure
Methan-diphosphonsäure und
Äthan-1,2-diphosphonsäure ist.

20. Verfahren gemäss Anspruch 1, dadurch gekennzeichnet, dass die Komponente c) eine Verbindung der Formel Id

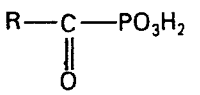 (Id)

worin R $C_1$-$C_6$ Alkyl bedeutet, ist.

21. Verfahren gemäss Anspruch 20, dadurch gekennzeichnet, dass die Verbindung der Formel Id
1-Oxoäthanphosphonsäure
1-Oxopropanphosphonsäure
1-Oxobutanphosphonsäure
1-Oxopentanphosphonsäure
1-Oxohexanphosphonsäure
1-Oxoheptanphosphonsäure ist.

22. Verfahren gemäss Anspruch 1 bis 21, dadurch gekennzeichnet, dass die Komponente c) in 10 bis 7000 ppm eingesetzt wird.

23. Verfahren gemäss Anspruch 22, dadurch gekennzeichnet, dass die Komponente c) in 200 bis 4000 ppm eingesetzt wird.

24. Gase und flüssige Kohlenwasserstoffe gereinigt durch das Verfahren, wie in den Ansprüchen 1 bis 23 beschrieben.

**Claims**

1. A process for the removal of hydrogen sulphide from gases or liquid hydrocarbons, comprising contacting the gas or liquid hydrogen with an aqueous alkaline solution, characterised in that said solution contains

(a) an anthraquinone disulphonic acid or a water-soluble sulphonamide thereof

(b) a compound of a metal which can exist in at least two valency states and

(c) a sequestering agent of the formula I

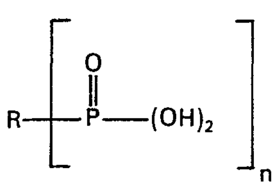 (I)

wherein R is an alkyl group containing from 1 to 12 carbon atoms and which is optionally substituted or interrupted by one or more hydroxyl and/or carboxyl groups, a carbonyl group, a phenyl group, or an aralkyl group containing 7 to 10 carbon atoms; and n is an integer from 1 to 4; as well as salts of compounds of formula I, in particular alkali metal salts, ammonium salts and esters.

2. A process according to claim 1, wherein R is an alkyl group containing from 1 to 12 carbon atoms and which is optionally substitued or interrupted by one or more hydroxyl and/or carboxyl groups; a phenyl group; or an aralkyl group containing 7 to 10 carbon atoms; and n is an integer of from 1 to 4; as well as salts thereof.

3. A process according to claim 1, wherein the alkaline solution has a pH value from 8 to 10.

4. A process according to claim 1, wherein the salt of the compound of formula I is an alkali metal salt or an ammonium salt.

5. A process according to claims 1 to 4, wherein the amount of component (a) is from 1000 to 4000 ppm.

6. A process according to claim 5, wherein the amount of component (a) is from 2000 to 3000 ppm.

7. A process according to claim 1, wherein the component (a) is one or more of anthraquinone -1:5-, -1:6-, -1:7-, -1:8-, -2:6- and -2:7- disulphonic acid; as well as mixtures of anthraquinone -2:6- and -2:7- acids or -1:5- and -1:8- disulphonic acids.

8. A process according to claim 1, wherein the component (a) is a product of the direct sulphonation of a compound of formula

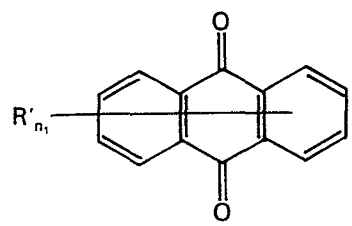 (II),

wherein $n_1$ is from 1 to 4 and R' is the same or different alkyl group having from 1 to 4 carbon atoms or a chlorine atom: at least one group R' being alkyl and there being at most 3 substituents when only one ring is substituted and at most 2 substituents per ring when both rings are substituted.

9. A process according to claim 1, wherein component (b) is a compound of vanadium.

10. A process according to claim 9, wherein the compound of vanadium is an ortho-, meta- or pyrovanadate of an alkali metal or ammonium.

11. A process according to either of claims 9 or 10, wherein the amount of component (b) used is from 1000 to 4000 ppm.

12. A process according to claim 11, wherein the amount of component (b) used is from 1500 to 2500 ppm.

13. A process according to claim 1, wherein component (c) is a compound of formula

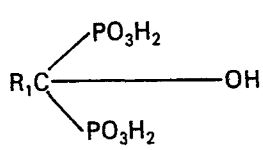 (Ia),

wherein $R_1$ is hydrogen or an alkyl group containing from 1 to 11 carbon atoms; and their water-soluble esters and salts.

14. A process according to claim 13, wherein $R_1$ is an alkyl group having from 1 to 4 carbon atoms.

15. A process according to either of claims 13 or 14, wherein the compound of formula Ia is 1-hydroxyethylidene-1,1-disphosphonic acid or its dimethyl or diethyl ester or its di-water-soluble salt.

16. A process according to claim 1, wherein component (c) is a compound of formula

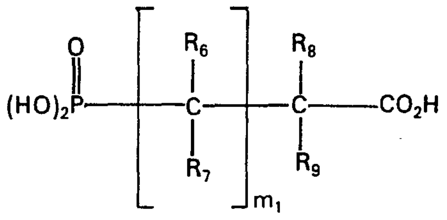

(Ib),

wherein $m_1$ is 0 or 1; and, when m, is 0, $R_8$ and $R_9$ are the same or different and each is hydrogen, an alkyl group having from 1 to 4 carbon atoms, a benzyl group, an allyl group, a $-CH_2PO_3H_2$ group, $-CH(COOH)CH_2COOH$ group, a group of formula $-CH_2CH(R_{10})Z$ wherein $R_{10}$ is hydrogen, methyl, $-CH_2COOH$ or $-CH_2CH_2COOH$ and Z is -COOH or $-PO_3H_2$; or $R_8$ is hydrogen an alkyl group having from 1 to 4 carbon atoms or an alkenyl or alkynyl group having from 2 to 4 carbon atoms, a phenyl group, a cycloalkyl group having 3 to 6 carbon atoms, a benzyl or phenethyl group, or a residue of formula $-CH(R_{11})-CH(R_{12})-COOH$ wherein $R_{11}$ is hydrogen, an alkyl group having from 1 to 4 carbon atoms or -COOH, and $R_{12}$ is hydrogen or methyl; and $R_9$ is $-CH_2CO_2H$; or $R_8$ is hydrogen or methyl and $R_9$ is $-CH_2COOH$, or $R_8$ is hydrogen and $R_9$ is hydroxy; and when $m_1$ is 1, $R_6$ and $R_7$ are the same or different and each is hydrogen, methyl or phenyl, with the proviso that $R_6$ and $R_7$ are not the same when $R_6$ is phenyl; $R_8$ is hydrogen; and $R_9$ is hydrogen, an alkyl group having from 1 to 4 carbon atoms or a $-CH_2CH_2COOH$ group; or $R_8$ and $R_9$ together form a methylene ($=CH_2$) group; or $R_6$ is hydrogen or methyl; $R_7$ is -COOH or $-PO_3H_2$; $R_8$ is hydrogen; and $R_9$ is $-CH_2COOH$, or when $R_8$ and $R_9$ are hydrogen, $R_6$ is $-CH_2CH_2COOH$ and $R_7$ is a $PO_3H_2$ group.

17. A process according to claim 16, wherein the compound of the formula Ib is 1-phosphonoethane-1,2-dicarboxylic acid,
2-phosphonoacetic acid,
2-phosphonopropionic acid,
2-methyl-3-phosphonopropionic acid,
2-phosphonopropane-1,2,3-tricarboxylic acid,
2-phosphonopropionic acid or
2-phosphonobutane-1,2,4-tricarboxylic acid.

18. A process according to claim 1, wherein component (c) is a compound of formula Ic

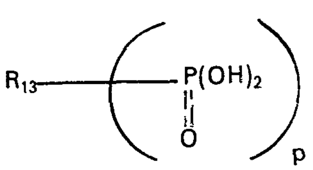

(Ic),

wherein $R_{13}$ is an alkyl residue having 1 to 7 carbon atoms or an alkylidene residue having from 1 to 7 carbon atoms optionally substituted by one or more groups containing oxygen or nitrogen or by -COOH; and p is 1 or 2.

19. A process according to claim 18, wherein the compound of formula Ic is:
methanephosphonic acid,
methane-diphosphonic acid, or
ethane-1,2-diphosphonic acid.

20. A process according to claim 1, wherein component (c) is a compound of the formula Id where R is an alkyl residue containing from 1 to 6 carbon atoms.

21. A process according to claim 20, wherein the compound of formula Id is
1-Oxoethane phosphonic acid
1-Oxopropane phosphonic acid
1-Oxobutane phosphonic acid
1-Oxopentane phosphonic acid
1-Oxohexane phosphonic acid
1-Oxoheptane phosphonic acid.

22. A process according to any of claims 1 to 21, wherein the amount of component (c) is from 10 to 7000 ppm.

23. A process according to claim 22, wherein the amount of component (c) is from 200 to 4000 ppm.

24. Gases and liquid hydrocarbons purified by the process as described in claims 1 to 23.

**Revendications**

1. Procédé pour éliminer $H_2S$ de gaz ou d'hydrocarbures liquides selon lequel on fait passer le gaz ou l'hydrocarbure liquide à travers une solution alcaline aqueuse, de préférence à un pH de 8 à 10, procédé caractérisé en ce que la solution contient:

a) un acide anthraquinone-disulfonique ou son sulfonamide soluble dans l'eau,

b) un composé métallique à métal au moins divalent et

c) un complexant répondant à la formule I

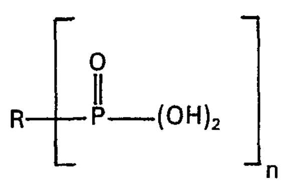

(I)

dans laquelle R représente un radical alkyle contenant de 1 à 12 atomes de carbone, qui peut être substitué ou interrompu par un ou plusieurs groupes hydroxy et/ou carboxy, un radical carbonyle, un radical phényle ou un radical aralkyle contenant de 7 à 10 atomes de carbone et n désigne un nombre entier de 1 à 4, ainsi que des sels des composés de formule I, plus spécialement des sels de métaux alcalins et des sels d'ammonium, et des esters.

2. Procédé selon la revendication 1, caractérisé en que R représente un radical alkyle contenant de 1 à 12 atomes de carbone, éventuellement substitué ou interrompu par un ou plusieurs groupes hydroxy et/ou carboxy, un radical phényle ou un radical aralkyle contenant de 7 à 10 atomes de carbone et n désigne un nombre entier de 1 à 4, les composés correspondants pouvant être à l'état de sels.

3. Procédé selon la revendication 1, dans lequel le pH de la solution alcaline est de 8 à 10.

4. Procédé selon la revendication 1, dans lequel le sel des composés de formule I est un sel de métal alcalin ou un sel d'ammonium.

5. Procédé selon l'une quelconque des revendications 1 à 4, caractérisé en ce que la composante a) est mise en jeu à raison de 1000 à 4000 ppm (parties par million).

6. Procédé selon la revendication 5, caractérisé en ce que la composante a) est utilisée en une quantité de 2000 à 3000 ppm.

7. Procédé selon la revendication 1, caractérisé en ce qu'on utilise, comme composante a), un ou plusieurs acides anthraquinone-disulfoniques-1,5, -1,6, -1,7, -1,8, -2,6 et -2,7 ou des mélanges d'acides anthraquinone-disulfoniques-2,6 et -2,7 ou d'acides anthraquinone-disulfoniques-1,5 et -1,8.

8. Procédé selon la revendication 1, caractérisé en ce que la composante a) est un produit de sulfonation d'un composé répondant à la formule II

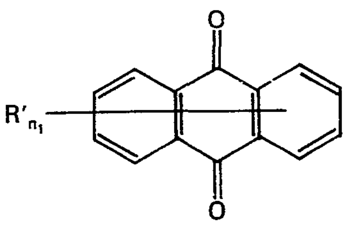 (II),

dans laquelle $n_1$ est un nombre de 1 à 4 et les symboles R' représentent chacun, indépendamment les uns des autres, un radical alkyle en $C_1$-$C_4$ ou le chlore, au moins l'un des R' étant un alkyle, et, lorsque seulement un des noyaux est substitué, ce noyau porte au plus 3 substituants R' tandis que lorsque les deux noyaux sont substitués il ne peut pas y avoir plus de 2 substituants par noyau.

9. Procédé selon la revendication 1, caractérisé en ce que la composante b) est un composé du vanadium.

10. Procédé selon la revendication 9, caractérisé en ce que le composé du vanadium est un sel de métal alcalin ou d'ammonium de l'acide orthovanadique, métavanadique ou pyrovanadique.

11. Procédé selon l'une des revendications 9 et 10 caractérisé en ce que la composante b) est utilisée en une quantité de 1000 à 4000 ppm.

12. Procédé selon la revendication 11, caractérisé en ce que la composante b) est utilisée en une quantité de 1500 à 2500 ppm.

13. Procédé selon la revendication 1, caractérisé en ce que la composante c) est un composé répondant à la formule Ia

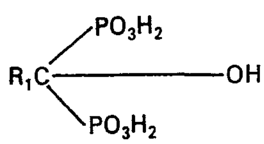 (Ia),

dans laquelle $R_1$ représente l'hydrogène ou un radical alkyle en $C_1$-$C_{11}$, ou un ester ou un sel hydrosoluble d'un tel composé.

14. Procédé selon la revendication 13, caractérisé en ce que $R_1$ représente un radical alkyle contenant de 1 à 4 atomes de carbone.

15. Procédé selon l'une des revendications 13 et 14, caractérisé en ce que le composé de formule Ia est l'acide hydroxy-1 éthane-diphosphonique-1,1, son ester diméthylique ou diéthylique ou l'un de ses sels hydrosolubles.

16. Procédé selon la revendication 1, caractérisé en ce que la composante c) est un composé répondant à la formule Ib

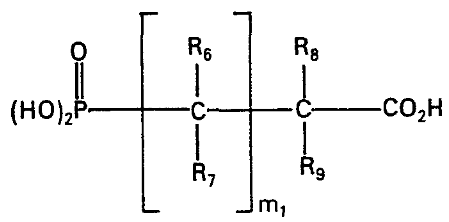 (Ib),

dans laquelle $m_1$ est égal à 0 ou à 1 et

- lorsque $m_1$ est égal à 0, $R_8$ et $R_9$ représentent chacun, indépendamment l'un de l'autre, l'hydrogène, un alkyle en $C_1$-$C_4$, un allyle, un benzyle, $-CH_2PO_3H_2$,$-CH(COOH)-CH_2COOH$,$-CH_2CH(R_{10})Z$ (le symbole $R_{10}$ désignant l'hydrogène, $-CH_3$, $-CH_2-COOH$ ou $-CH_2CH_2COOH$ et Z représentant -COOH ou $-PO_3H_2$), ou $R_8$ représente l'hydrogène, un alkyle en $C_1$-$C_4$, un alcényle en $C_2$-$C_4$, un alcynyle en $C_2$-$C_4$, un phényle, un cycloalkyle en $C_3$-$C_6$, un benzyle, un phényl-éthyle ou un radical $-CH(R_{11})-CH(R_{12})-COOH$ (le symbole $R_{11}$ représentant l'hydrogène, un alkyle en $C_1$-$C_4$ ou -COOH et $R_{12}$ représentant l'hydrogène ou un méthyle) et $R_9$ représente $-CH_2COOH$, ou encore $R_8$ représente l'hydrogène et $R_9$ un groupe hydroxy, et
- lorsque $m_1$ est égal à 1, $R_6$ et $R_7$ représentent chacun, indépendamment l'un de l'autre, l'hydrogène ou un radical méthyle ou phényle avec la condition que, lorsque $R_6$ est un phényle, $R_7$ n'en soit pas un, $R_8$ représente l'hydrogène et $R_9$ représente l'hydrogène, un alkyle en $C_1$-$C_4$ ou $-CH_2CH_2COOH$, ou $R_8$ et $R_9$ forment ensemble un radical méthylène ($=CH_2$), ou $R_6$ représente l'hydrogène ou un méthyle, $R_7$ représente -COOH ou $-PO_3H_2$, $R_8$ représente l'hydrogène et $R_9$ un radical $-CH_2COOH$, ou encore, lorsque $R_8$ et $R_9$ représentent l'hydrogène, $R_6$ est un radical $-CH_2CH_2COOH$ et $R_7$ un radical $-PO_3H_2$.

17. Procédé selon la revendication 16, caractérisé en ce que le composé de formule Ib est pris dans l'ensemble constitué par:

l'acide phosphono-1 éthane-dicarboxylique-1,2
l'acide phosphono-2 acétique
l'acide phosphono-2 propionique
l'acide méthyl-2 phosphono-3 propionique
l'acide phosphono-2 propane-tricarboxylique-1,2,3
l'acide phosphono-3 propionique et
l'acide phosphono-2 butane-tricarboxylique-1,2,4.

18. Procédé selon la revendication 1, caractérisé en ce que la composante c) est un composé répondant à la formule Ic

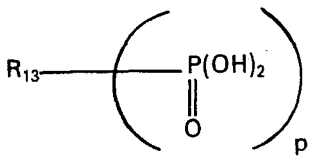

(Ic),

dans laquelle $R_{13}$ représente un radical alkyle en $C_1$-$C_7$ ou un radical alkylidène en $C_1$-$C_7$, $R_{13}$ pouvant éventuellement porter un ou plusieurs groupes contenant de l'oxygène ou de l'azote ou un groupe -COOH, et p désigne le nombre 1 ou le nombre 2.

19. Procédé selon la revendication 18, caractérisé en ce que le composé de formule Ic est pris dans l'ensemble constitué par:
l'acide méthane-phosphonique
l'acide méthane-diphosphonique et
l'acide éthane-diphosphonique-1,2.

20. Procédé selon la revendication 1, caractérisé en ce que la composante c) est un composé répondant à la formule Id

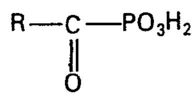

(Id)

dans laquelle R représente un radical alkyle contenant de 1 à 6 atomes de carbone.

21. Procédé selon la revendication 20, caractérisé en ce que le composé de formule Id est pris dans l'ensemble constitué par:
l'acide oxo-1 éthane-phosphonique
l'acide oxo-1 propane-phosphonique
l'acide oxo-1 butane-phosphonique
l'acide oxo-1 pentane-phosphonique
l'acide oxo-1 hexane-phosphonique et
l'acide oxo-1 heptane-phosphonique.

22. Procédé selon l'une quelconque des revendications 1 à 21, procédé caractérisé en ce que la composante c) est mise en jeu à raison de 10 à 7000 ppm.

23. Procédé selon la revendication 22, caractérisé en ce que la composante c) est mise en jeu à raison de 200 à 4000 ppm.

24. Gaz et hydrocarbures liquides qui ont été purifiés par le procédé décrit dans les revendications 1 à 23.